# EUROPÄISCHE PATENTSCHRIFT

(11) **EP 0 440 916 B1**
(45) Veröffentlichungstag und Bekanntmachung des Hinweises auf die Patenterteilung: **26.05.1993**
(21) Anmeldenummer: 90123363.5
(22) Anmeldetag: 06.12.1990
(51) Int. Cl.: G01P 3/48

(54) **Schaltungsanordnung zur Signalaufbereitung bei Raddrehzahlgebern von Fahrzeugen**
Circuitry for the processing of signals from a vehicle wheel speed sensor
Circuit de traitement pour un capteur de vitesse d'une roue d'un véhicule

(30) Priorität: 29.01.1990 DE 4002549
(43) Veröffentlichungstag der Anmeldung: 14.08.1991
(73) Patentinhaber: KNORR-BREMSE AG, 80710 München (DE)
(72) Erfinder: Mayer, Alfons, W-8000 München 50 (DE); Schafitel, Franz, W-8061 Schwabhausen (DE)

(56) Entgegenhaltungen:
- WO-A-87/06348
- DE-A- 3 226 073
- DE-A- 3 620 884
- DE-B- 2 722 581

## Beschreibung

Die Erfindung betrifft eine Schaltungsanordnung zur Signalaufbereitung von Ausgangssignalen eines Raddrehzahlgebers von Fahrzeugen, der in einer geregelt stromversorgten, symmetrischen Brückenschaltung einen Feldplattenmeßfühler mit zwei Feldplatten aufweist, an welchen die Zähne eines sich mit einem Fahrzeugrad drehenden Meßzahnrades vorbeibewegbar sind, mit einem von den beiden Brückenzweigen ansteuerbaren, rückgekoppelten Differenzverstärker, mit einem von diesem ansteuerbaren Schwellwertschalter und mit einem Tiefpaßfilter.

Eine derartige Schaltungsanordnung ist aus der DE-B-27 22 581 bekannt. Es ist Aufgabe der Erfindung, eine derartige Schaltungsanordnung mit geringem Aufwand dahingehend auszubilden, daß die Signalaufbereitung mit gesteigerter Sicherheit erfolgt.

Diese Aufgabe wird nach der Erfindung dadurch gelöst, daß der Feldplattenmeßfühler als Differentialfeldplattenmeßfühler ausgebildet ist, dessen beide Differentialfeldplatten anschließend an einen Stromversorgungsanschluß in die beiden, jeweils durch einen Widerstand ergänzten Brückenzweige eingeordnet sind, daß die beiden zwischen jeweils einer der Differentialfeldplatten und einem der Widerstände befindlichen Brückenabgriffe mit den beiden Eingängen des Differenzverstärkers verbunden sind und daß an den Ausgang des Differenzverstärkers parallel zur Ansteuerung des Schwellwertschalters über den Tiefpaßfilter ein mit einem der Widerstände der Brückenschaltung verbundener Impedanzwandler zur Kompensation des Offset der Brückenschaltung angeschlossen ist.

Nach der weiteren Erfindung vorteilhafte Ausgestaltungsmöglichkeiten einer derartigen Schaltungsanordnung sind in den abhängigen Ansprüchen aufgezeigt.

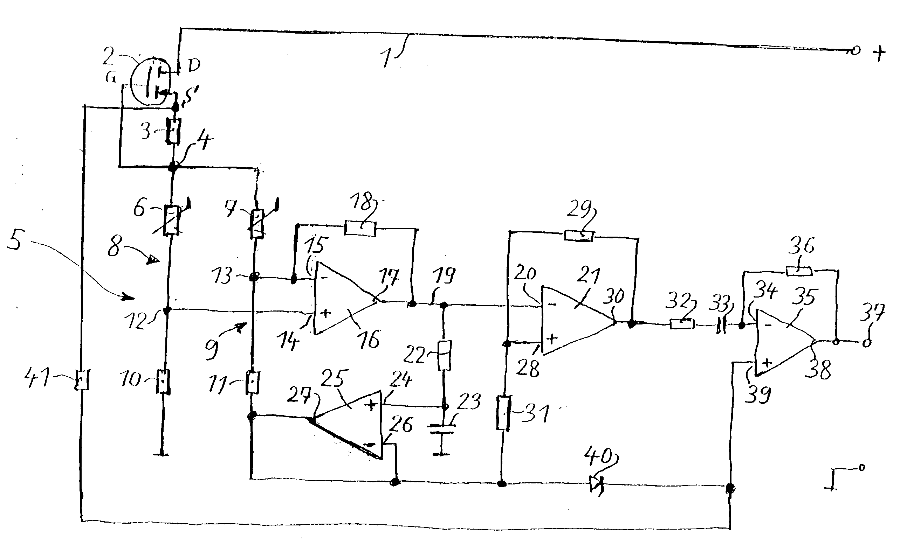

In der Zeichnung ist ein Ausführungsbeispiel für eine nach der Erfindung ausgebildete Schaltungsanordnung dargestellt.

Ein mit seinem Anschluß D (Drain) über eine Leitung 1 mit dem positiven Pol einer nicht dargestellten Spannungsquelle verbundener Feldeffekttransistor 2 ist mit seinem Anschluß G (Gate) unmittelbar und seinem Anschluß S (Source) über einen Widerstand 3 mittelbar mit dem Stromversorgungsanschluß 4, d.h. der Stromquelle einer Brückenschaltung 5 verbunden. Die Brückenschaltung 5 weist einen Differentialfeldplattenmeßfühler auf, dessen beide Differentialfeldplatten 6 und 7 anschließend an den Stromversorgungsanschluß 4 in jeweils einen Brückenzweig 8 bzw. 9 der Brückenschaltung 5 eingeschaltet sind; jedem Brückenzweig 8 bzw. 9 gehört des weiteren ein Widerstand 10 bzw. 11 zu. Die zwischen jeweils einer Differentialfeldplatte 6 bzw. 7 und einem Widerstand 10 bzw. 11 befindlichen Rückenabgriffe 12 und 13 stehen mit den beiden Eingängen 14 und 15 eines Differenzverstärkers 16 in Verbindung. Der Ausgang 17 des Differenzverstärkers 16 ist über einen Widerstand 18 zum intervertierenden, an den Brückenabgriff 13 des Brückenzweiges 9 angeschlossenen Eingang 15 rückgekoppelt. Vom Ausgang 17 führt eine Verbindung 19 zum intervertierenden Eingang 20 eines zweiten Differenzverstärkers 21. Ein Widerstand 22 bildet zusammen mit einem Kondensator 23 ein Tiefpaßfilter 22,23, das widerstandsseitig an den Ausgang 17 und kondensatorseitig an Masse angeschlossen ist; zwischen dem Widerstand 22 und dem Kondensator 23 ist das Tiefpaßfilter 22,23 an den nichtinvertierenden Eingang 24 eines Impedanzwandlers 25 angeschlossen. Der invertierende Eingang 26 sowie der Ausgang 27 des Impedanzwandlers 25 sind gemeinsam an die dem invertierenden Eingang 15 des Differenzverstärkers 16 abgewandte Seite des Widerstandes 11 angeschlossen. Der nichtinvertierende Eingang 28 des zweiten Differenzverstärkers 21 ist über einen Widerstand 29 zum Ausgang 30 rückgekoppelt und steht über einen weiteren Widerstand 31 mit dem invertierenden Eingang 26 des Impedanzwandlers 25 in Verbindung. Der Ausgang 30 des zweiten Differenzverstärkers 21 ist über einen Widerstand 32 und einen Kondensator 33, welche als R-C-Glied 32,33 differenzierend wirken, mit dem invertierenden Eingang 34 eines Schwellenwertschalters 35 verbunden; der Schwellenwertschalter 35 kann gemäß dem Ausführungsbeispiel als im Sättigungsgebiet betriebener Differenzverstärker ausgebildet sein. Ein Widerstand 36 dient als Rückkopplung vom zugleich den Ausgang 37 der Schaltungsanordnung bildenden Ausgang 38 des Schwellwertschalters 35 zu dessen invertierenden Eingang 34. Der nicht invertierende Eingang 39 des Schwellwertschalters 35 ist an die Anode einer Zenerdiode 40 und an einen Widerstand 41 angeschlossen; die Zenerdiode 40 steht andererseits mit dem invertierenden Eingang 26 des Impedanzwandlers 25 und der Widerstand 41 andererseits mit dem Anschluß S (Source) des Feldeffekttransistors 2 in Verbindung.

Die Differentialfeldplatten 6 und 7 stehend unter dem Einfluß der an ihnen vorbeibewegbaren Zähne eines nicht dargestellten Meßzahnrades, welches von einem Fahrzeugrad antreibbar bzw. mit diesem drehbar ist.

Die vorstehend beschriebene Schaltungsanordnung wirkt wie folgt :

Die Differentialfeldplatten 6 und 7 ändern unter der Einwirkung eines periodisch durch die Zähne des Meßzahnrades sich ändernden Magnetfeldes zueiander gegenläufig ihren ohmschen Widerstand, wodurch die Brückenschaltung 5 verstimmt wird, so daß ein am Stromversorgungsanschluß 4 für die beiden Brückenzweige 8 und 9 eingespeister, konstanter Strom je Brückenzweig 8 bzw. 9 entsprechend moduliert wird und an den Brückenabgriffen 12 und 13 eine nahezu sinusförmige Spannung erscheint, deren Frequenz proportional der Umdrehungsgeschwindigkeit des Meßzahnrades ist. Die Amplitude dieser Spannung ist abhängig von der Stärke des magnetischen Flusses durch die Differentialfeldplatten 6 und 7 und damit indirekt abhängig von der Größe des Luftspaltes zwischen dem Meßzahnrad und den Differentialfeldplatten 6,7 sowie von der Größe des in die Brückenschaltung 5 eingespeisten Stromes. Diese sinusförmige Spannung an den Brückenabgriffen 12,13 wird in dem Differnzverstärker 16 verstärkt, so daß an dessen Ausgang 17 weiterhin eine sinusförmige Spannung ansteht, die dem Eingang 20 des zweiten Differenzverstärkers 21 zugeführt wird. Die Verschaltung des Differenzverstärkers 16 über den Tiefpaßfilter 22,23 mit dem Impedanzwandler 25 bewirkt über den Widerstand 11 der Brückenschaltung 5 eine Kompensation des Offset an den Brückenabgriffen 12 und 13, der Offset wird hervorgerufen durch Toleranzen des Grundwiderstandes der jeweiligen Differntialfeldplatten 6 und 7 sowie der jeweiligen Temperaturdrift. Dies hat zum Vorteil, daß der Gleichspannungspegel des Ausgangssignales des Differenzverstärkers 16 konstant bleibt und insbesondere auch die Symmetrie beider Halbwellen der überlagerten Wechselspannung, d.h. des Nutzsignals, erheblich verbessert wird. Dies ist dann von Bedeutung, wenn ein Tastverhältnis von 1:1 des rechteckförmigen Ausgangssignales des Schwellenwertschalter 35 gefordert wird, der über den Differenzverstärker 21 und das Differenzierglied 32,33 das verstärkte Ausgangssignal des Differenzverstärkers 16 erhält.

Am invertierenden Eingang 26 des Impedanzwandlers 25 und den mit diesem unmittel verbundenen Teilen liegt das gleiche Gleichspannungspotential wie an den beiden Brückenabgriffen 12 und 13 sowie an den Ausgängen 17 und 30 der Differenzverstärker 16 und 21 an. Dieses Potential wird mit der Zenerdiode 40 zusätzlich angehoben und dem nichtinvertierenden Eingang 39 des Schwellwertschalters 35 zugeführt, so daß das Ausgangspotential im Ruhezustand ebenfalls diesen Wert annimmt. Dieses Potential dient bei stillstehendem Meßzahnrad und damit stillstehendem Fahrzeug als Überwachungssignal für die Schaltungsanordnung. Damit ist eine Fehlererkennung im Stillstand möglich, welche vorteilhaft für Diagnosezwecke für angeschlossene Elektronikgeräte anzuwenden ist.

Das Überwachungspotential wird vermittels des zwischen den Source-Anschluß S des Feldeffekttransistors 2 und die Anode der Zenerdiode 40 eingeschalteten Widerstandes 41 gebildet.

### Bezugszeichenliste

- 1: Leitung
- 2: Feldeffekttransistor
- 3: Widerstand
- 4: Stromversorgungsanschluß
- 5: Brückenschaltung
- 6: Differentialfeldplatte
- 7: Differentialfeldpaltte
- 8: Brückenzweig
- 9: Brückenzweig
- 10: Widerstand
- 11: Widerstand
- 12: Brückenabgriff
- 13: Brückenabgriff
- 14: Eingang
- 15: Eingang
- 16: Differenzverstärker
- 17: Ausgang
- 18: Widerstand
- 19: Verbindung
- 20: Eingang
- 21: (2.) Differenzverstärker
- 22: Widerstand
- 23: Kondensator
- 22,23: Tiefpaßfilter
- 24: Eingang
- 25: Impedanzwandler
- 26: Eingang
- 27: Ausgang
- 28: Eingang
- 29: Widerstand
- 30: Ausgang
- 31: Widerstand
- 32: Widerstand
- 33: Kondensator
- 32,33: R-C-Glied
- 34: Eingang
- 35: Schwellenwertschalter
- 36: Widerstand
- 37: Ausgang
- 38: Ausgang
- 39: Eingang
- 40: Zenerdiode
- 41: Widerstand

- D: Anschluß
- G: Anschluß
- S: Anschluß

## Patentansprüche

1. Schaltungsanordnung zur Signalaufbereitung von Ausgangssignalen eines Raddrehzahlgebers von Fahrzeugen, der in einer geregelt stromversorgten, symmetrischen Brückenschaltung (5) einen Feldplattenmeßfühler mit zwei Feldplatten (6,7) aufweist, an welchen die Zähne eines sich mit einem Fahrzeugrad drehenden Meßzahnrades vorbeibewegbar sind, mit einem von den beiden Brückenzweigen (8,9) ansteuerbaren, rückgekoppelten Differenzverstärker (16), mit einem von diesem ansteuerbaren Schwellwertschalter (35) und mit einem Tiefpaßfilter (22,23), dadurch gekennzeichnet, daß der Feldplattenmeßfühler als Differentialfeldplattenmeßfühler ausgebildet ist, dessen beiden Differentialfeldplatten (6,7) anschließend an einen Stromversorgungsanschluß (4) in die beiden, jeweils durch einen Widerstand (10,11) ergänzten Brückenzweige (8,9) eingeordnet sind daß die beiden zwischen jeweils einer der Differentialfeldplatten (6,7) und einem der Widerstände (10,11) befindlichen Brückenabgriffe (12,13) mit den beiden Eingängen (14,15) des Differenzverstärkers (16) verbunden sind und daß an den Ausgang (17) des Differenzverstärkers (16) parallel zur Ansteuerung des Schwellwertschalters (35) über das Tiefpaßfilter (22,23) ein mit einem der Widerstände (11) der Brückenschaltung (5) verbundener Impedanzwandler (25) zur Kompensation des Offset der Brückenschaltung (5) angeschlossen ist.

2. Schaltungsanordnung nach Anspruch 1, dadurch gekennzeichnet, daß der Stromversorgungsanschluß (4) der Brückenschaltung (5) an Gate (G) und über einen Widerstand (3) an Source (S) eines Feldeffekttransistors (2) angeschlossen ist.

3. Schaltungsanordnung nach Anspruch 1 oder 2, dadurch gekennzeichnet, daß der Impedanzwandler (25) mit seinem invertierenden Eingang (26) und seinem Ausgang (27) an den andererseits mit dem invertierenden Eingang (15) des Differenzverstärkers (16) verbundenen Widerstand (11) der Brückenschaltung (5) angeschlossen ist.

4. Schaltungsanordnung nach Anspruch 3, dadurch gekennzeichnet, daß zwischen den Differenzverstärker (16) und den Schwellwertschalter (35) ein zweiter Differenzverstärker (21) eingeschaltet ist, dessen nichtinvertierender, über einen Widerstand (29) rückgekoppelter Eingang (28) über einen weiteren Widerstand (31) mit dem invertierenden Eingang (26) des Impedanzwandlers (25) verbunden ist.

5. Schaltungsanordnung nach Anspruch 4, dadurch gekennzeichnet, daß der nichtinvertierende Eingang (24) des Impedanzwandlers (25) an das Tiefpaßfilter (22,23) zwischen dessen Kondensator (23) und dessen Widerstand (22) angeschlossen ist, wobei der Widerstand (22) andererseits an eine Verbindung (19) vom Ausgang (17) des ersten Differenzverstärkers (16) zum invertierenden Eingang (20) des zweiten Differenzverstärkers (21) und der Kondensator (23) andererseits an Masse angeschlossen ist.

6. Schaltungsanordnung nach Anspruch 5, wobei der Schwellwertschalter (35) als Differenzverstärker ausgebildet ist, dadurch gekennzeichnet, daß der Schwellwertschalter (35) mit seinem invertierenden Eingang (34) über ein R-C-Glied (32,33) an den Ausgang (30) des zweiten Differenzverstärkers (21) und mit seinem nichtinvertierenden Eingang (39) an die Anode einer Zenerdiode (40) und einen deren Stromversorgung dienenden Widerstand (41) angeschlossen ist, wobei die Zenerdiode (40) andererseits mit dem invertierenden Eingang (26) des Impulswandlers (25) verbunden ist.

7. Schaltungsanordnung nach den Ansprüchen 2 und 6, dadurch gekennzeichnet, daß der zur Stromversorgung der Zenerdiode (40) vorgesehene Widerstand (41) an Source (S) des Feldeffekttransistors (2) angeschlossen ist.

## Claims

1. Circuitry for signal processing of output signals of a wheel sensor of vehicles featuring a magnetoresistive sensor with two magnetoresistive elements (6, 7) in a symmetric bridge circuit (5) with controlled power supply, where the teeth of a measuring gearwheel rotating with one vehicle wheel are able to move past, with one feedback differential amplifier (16) that is controllable from both bridge arms (8, 9), with one threshold element (35) that can be controlled by the amplifier and with a lowpass filter (22, 23) wherein the magnetoresistive sensor is designed as a differential magnetoresistive sensor whose two differential magnetoresistive elements (6, 7) are fitted downstream of a power supply port (4) into the two bridge arms (8, 9) respectively completed by a resistance (10, 11), wherein the two bridge circuit taps (12, 13) located between one of the differential magnetoresistive elements (6, 7) and one of the resistances (10, 11) respectively are connected to the two inlets (14, 15) of the differential amplifier (16) and wherein at the outlet (17) of the differential amplifier (16) an impedance converter (25) linked to one of the resistances (11) of the bridge circuit (5) is connected parallel to the control of the threshold element (35) via the lowpass filter (22, 23) for compensation of the offset of the bridge circuit (5).

2. Circuitry according to claim 1, wherein the power supply connection (4) of the bridge circuit (5) is connected to Gate (G) and via a resistance (3) to Source (S) of a field-effect transistor (2).

3. Circuitry according to claim 1 or 2, wherein the impedance converter (25) is connected with its inverting inlet (26) and its outlet (27) to the resistance (11) of the bridge circuit (5) linked on the other hand to the inverting inlet (15) of the differential amplifier (16).

4. Circuitry according to claim 3, wherein a second differential amplifier (21) is inserted between the differential amplifier (16) and the threshold element (35) whose non-inverting inlet (28) fed back via a resistance (29) is connected to the inverting inlet (26) of the impedance converter (25) via a further resistance (31).

5. Circuitry according to claim 4, wherein the non-inverting inlet (24) of the impedance converter (25) is connected to the lowpass filter (22, 23) between its condensator (23) and its resistance (22), with the resistance (22) being linked on one hand to a connection (19) from the outlet (17) of the first differential amplifier (16) to the inverting inlet (20) of the second differential amplifier (21) and the condensator (23) being connected on the other hand to the ground.

6. Circuitry according to claim 5, with the threshold element (35) being designed as a differential amplifier, wherein the threshold element (35) is connected with its inverting inlet (34) via a R-C element (32, 33) to the outlet (30) of the second differential amplifier (21) and with its non-inverting inlet (39) to the anode of a zener diode (40) and to a resistance (41) serving for its power supply, with the zener diode (40) being, on the other hand, connected to the inverting inlet (26) of the pulse converter (25).

7. Circuitry according to claims 2 and 6, wherein the resistance (41) provided for the power supply of the zener diode (40) is connected to Source (S) of the field-effect transistor (2).

## Revendications

1. Montage pour la préparation de signaux de sortie d'un capteur de la vitesse de rotation de roues de véhicules, qui comporte, dans un circuit en pont (5) symétrique et à alimentation régulée en courant, un capteur de mesure de la magnétorésistance à deux magnétorésistances (6, 7), devant lequel sont susceptibles de se déplacer les dents d'une roue dentée de mesure, comportant un amplificateur différentiel (16) monté en contreréaction et susceptible d'être commandé par les deux bras (8, 9) du pont, ainsi qu'un commutateur à valeur de seuil (35) susceptible d'être commandé par ledit amplificateur différentiel, et un filtre passe-bas (22, 23), caractérisé par le fait que le capteur de mesure de la magnétorésistance est réalisé sous la forme d'un capteur de mesure différentiel de la magnétorésistance dont les deux magnétorésistances différentielles (6, 7), reliées à une borne d'alimentation en courant (4), sont disposées dans les deux branches (8, 9) du pont, chacune étant complétée par une résistance (10, 11), que les deux prises du pont (12, 13), dont chacune est située entre l'une des magnétorésistances (6, 7) et l'une des résistances (10, 11), sont reliées aux deux entrées (14, 15) de l'amplificateur différentiel (16), et qu'à la sortie (17) de l'amplificateur différentiel (16), en parallèle de la commande du commutateur à valeur de seuil (35), et par l'intermédiaire de filtre passe-bas (22, 23), est raccordé un adaptateur d'impédance (25) relié à l'une des résistances (11) du circuit en pont (5), en vue de compenser le déséquilibre de ce dernier.

2. Montage selon la revendication 1, caractérisé par le fait que la borne d'alimentation en courant (4) du circuit en pont (5) est reliée à la grille (G), et, par intermédiaire d'une résistance (3), à la source (S) d'un transistor à effet de champ (2).

3. Montage selon la revendication 1 ou 2, caractérisé par le fait que l'adaptateur d'impédance (25) est relié, par son entrée inverseuse (26) et par sa sortie (27) à la résistance (11) du circuit en pont (5), reliée, ladite sortie (27) étant par ailleurs, à l'entrée inverseuse (15) de l'amplificataur différentiel (16).

4. Montage selon la revendication 3, caractérisé par le fait qu'entre l'amplificateur différentiel (16) et le commutateur à valeur de seuil (25) est monté un second amplificateur différentiel (21) dont l'entrée non-inverseuse (28) qui est rétrocouplée par l'intermédiaire d'une résistance (29), est reliée, par l'intermédiaire d'une résistance supplémentaire (31), à l'entrée inverseuse (26) de l'adaptateur d'impédance (25).

5. Montage selon la revendication 4, caractérisé par le fait que l'entrée non-inverseuse (24) de l'adaptateur d'impédance (25) est reliée au filtre passe-bas (22, 23), entre le condensateur (23) et la résistance (22) de ce dernier, la résistance (22) étant, par ailleurs, reliée au point de liaison (19) entre la sortie (17) du premier amplificateur différentiel (21), alors que le condensateur (23) est, par ailleurs, relié à la masse.

6. Montage selon la revendication 5, dans lequel le commutateur à valeur de seuil (35) est réalisé sous la forme d'un amplificateur, caractérisé par le fait que le commutateur à valeur de seuil (35) est relié par son entrée inverseuse (34) et par l'intermédiaire d'un circuit RC (32, 33) à la sortie (30) du second amplificateur différentiel (21) , et par son entrée non- inverseuse (39) à l'anode d'une diode Zener (40) et à une résistance (41) servant d'alimentation en courant, la diode Zener (40) étant, par ailleurs, reliée à l'entrée inverseuse (26) de l'adaptateur d'impédance (25).

7. Montage selon les revendications 2 et 6, caractérisé par le fait que la résistance (41) prévue pour l'alimentation en courant de la diode Zener (40), est reliée à la source (5) du transistor à effet de champ (2).
